# EUROPEAN PATENT SPECIFICATION

(11) **EP 2 019 803 B1**
(45) Date of publication and mention of the grant of the patent: **30.07.2014**
(21) Application number: 07722610.8
(22) Date of filing: 15.05.2007
(51) Int. Cl.: B65G 47/64, B65G 47/46

(54) **SORTING CONVEYOR SYSTEM**
SORTIERFÖRDERERSYSTEM
SYSTÈME DE CONVOYEURS DE TRI

(30) Priority: 24.05.2006 DK 200600714
(43) Date of publication of application: 04.02.2009
(73) Proprietor: Univeyor A/S, 9510 Arden (DK)
(72) Inventor: CHRISTENSEN, Torben, 9510 Arden (DK)
(74) Representative: Chas. Hude A/S
(86) International application number: PCT/DK2007/000231
(87) International publication number: WO 2007/134602

(56) References cited:
- EP-A2- 0 778 229
- WO-A1-97/15405
- WO-A1-2005/032940
- DE-C- 709 755
- FR-A1- 2 104 687
- JP-A- 60 148 807
- JP-A- 61 211 217
- JP-A- 61 211 217
- US-A- 5 188 210

## Description

### Field of the Invention

The present invention concerns a conveyor system for sorting items and of the kind indicated in the preamble of claim 1.

### Background of the Invention

By prior art conveyor systems for sorting items, there is used relatively complicated and very costly mechanical constructions in the receiving positions directing items laterally out to predetermined receiving positions at both sides of the conveyor system, e.g. in the shape of mechanisms for tilting a conveyor section opposite the receiving station, or in the form of mechanical arms that may be turned in over the conveyor system for moving a predetermined item out to a desired receiving position.

From postal sorting systems, it is furthermore known with so-called tip conveyors, where respective conveyor sections are adapted to tilt opposite a predetermined receiving position with the intention of moving out a predetermined item in the said receiving position. Also, here there is a case of relatively complicated and very costly mechanical constructions.

DE 709 755 C discloses a conveyor system according to the preamble of claim 1, furthermore it has a belt conveyor arranged with three belt conveyors in a row in both direction conditions promoting belt conveyors, the respective conveying band ends are mutually in over or under-reach, wherein the central conveyor is arranged inclined to a turntable so as to be able to transport bulk material between the neighboring belt conveyors placed at the respective side of said central turnable conveyor. In other words the intermediate conveyor may be shorter than the distance between the end drum of the mutually adjoining conveyors. However this belt conveyor assembling is not suitable for lossless and gentle sorting or delivery.

JP 61211217 A discloses a sorting device for belt conveyor the durability of which is improved by disposing a sorting belt conveyor capable of turning in the horizontal direction between straight advance conveyors, thereby to obliquely distribute an article to positions along both sides of the sorting device.

### Object of the Invention

It is the purpose of the invention to provide a new and improved conveyor system of the kind specified in the introduction, and which by means of simple technical measures enables counteracting the said drawbacks by corresponding prior art conveyor systems, and furthermore to achieve essential and new application advantages.

### Description of the Invention

The conveyor system according to the invention is as stated in claim 1.

By means of simple technical measures it hereby becomes possible to counteract the said drawbacks of corresponding prior art conveyor systems and furthermore to achieve advantages that are very essential and new in the application.

It is to be particularly emphasised that said conveyor system according to the invention can be used almost universally for sorting out very different items, which may vary both in size and in weight with great speed and capacity, e.g. from box packings of up to 30 kg to very light plastic bags with a content in the form of e.g. a few electric fuses.

And the conveyor system according to the invention is furthermore preferably designed so that at the foremost end part and some distance to the rear, said pivotally belt conveyor is designed with little thickness as a foremost reversing roller and a reversing roller disposed some distance to the rear of the foremost roller have small diameter.

The conveyor system according to the invention is furthermore suitably designed so that the pivot control mechanism is designed with mutually parallel, downwards open guide sections that are interspaced and adapted for receiving guide rollers of the control arm, and that the spacing between the guide rollers on the control arm is the same as the spacing between the guide sections.

With regard to control, the conveyor system according to the invention is designed so that the engagement between the guide rollers of the control arm and the guide sections is arranged so that the guide rollers engage both guide sections when the control arm is transversely disposed in relation to a longitudinal centre axis of the pivotable belt conveyor, corresponding to the latter not being turned outwards.

With the object of delivering items to a receiving position to the left side, the conveyor system according to the invention is suitably designed so that the engagement between the guide rollers of the control arm and the guide sections is arranged so that a left one of the guide rollers engages a left one of the guide sections when the control arm is turned clockwise, corresponding to the pivotable belt conveyor being turned outwards about 45° to the left side in relation to a longitudinal centre axis.

With the object of delivering items to a receiving position to the left side, the conveyor system according to the invention is suitably designed so that the engagement between the guide rollers of the control arm and the guide sections is arranged so that a right one of the guide rollers engages a right one of the guide sections when the control arm is turned counterclockwise, corresponding to the pivotable belt conveyor being turned outwards about 45° to the right side in relation to a longitudinal centre axis.

In a particularly simple way, the conveyor system according to the invention may be designed so that the pivot control mechanism includes position control means in the form of induction sensors that are adjustably mounted in curving slots, and which interact with plate-shaped position guide members.

The conveyor system according to the invention is preferably designed so that each of the belt conveyors includes an electric drive motor which is adapted to accelerate the belt conveyor at least when turned laterally outwards in relation to a longitudinal centre axis with the purpose of moving items out to a receiving position.

### Description of the Drawing

The invention is now explained more closely in connection with the drawing, in which:
- Fig. 1: shows a plan view of an embodiment of a sorting member of a conveyor system according to the invention, as seen from above;
- Fig. 2: shows the sorting member of a conveyor system according to the invention shown in Fig. 1 as seen from the side;
- Fig. 3: shows the sorting member of a conveyor system according to the invention as shown in Fig. 1, as seen from above and with a foremost belt conveyor turned out to the left in relation to a central longitudinal axis;
- Fig. 4: shows the sorting member of a conveyor system according to the invention as shown in Fig. 1, as seen from above and with a foremost belt conveyor turned out to the right in relation to a central longitudinal axis;
- Fig. 5: shows the sorting member of a conveyor system according to the invention as shown in Fig. 1, as seen from above and with an middle belt conveyor turned out to the left in relation to a central longitudinal axis;
- Fig. 6: shows the sorting member of a conveyor system according to the invention as shown in Fig. 1, as seen from above and with an middle belt conveyor turned out to the right in relation to a central longitudinal axis;
- Fig. 7: shows the mutual position and engagement of individual parts of the pivot control mechanism when the belt conveyor is not turned outwards in relation to a central longitudinal axis;
- Fig. 8: shows the mutual position and engagement of individual parts of the pivot control mechanism when the belt conveyor is turned out to the left in relation to a central longitudinal axis;
- Fig. 9: shows the mutual position and engagement of individual parts of a pivot control mechanism when the belt conveyor is turned out to the right in relation to a central longitudinal axis; and
- Fig. 10: shows a detailed view of the individual parts of an embodiment of a pivot control mechanism for a conveyor system according to the invention.

### Detailed Description of the Invention

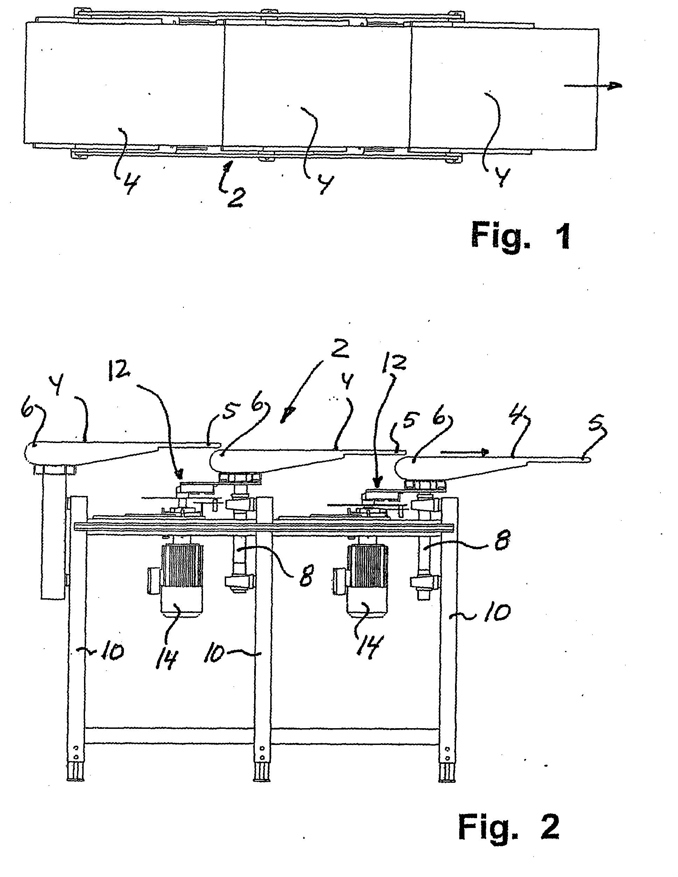

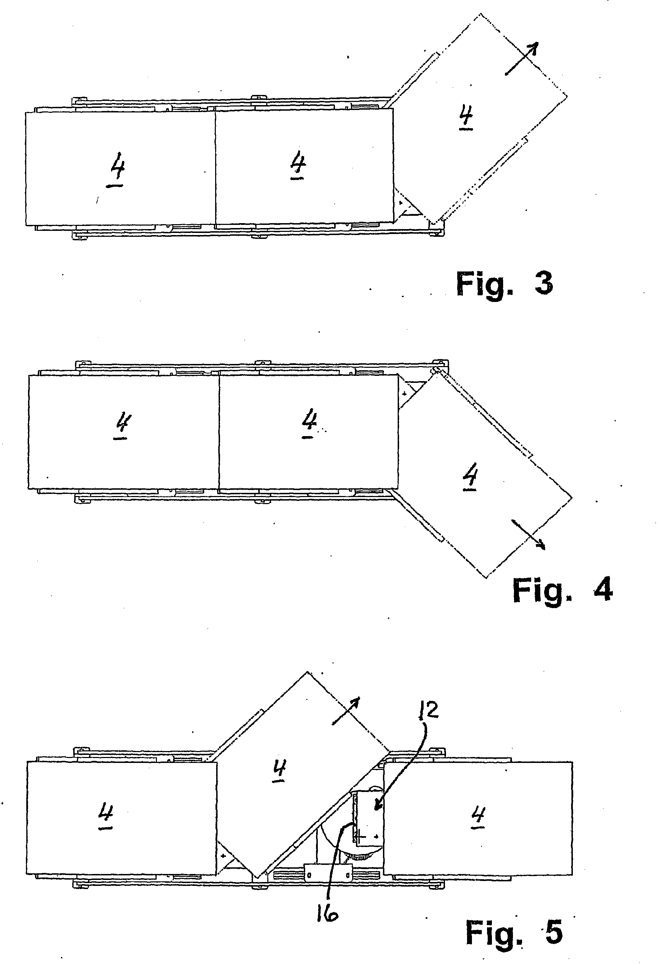

The sorting member 2 shown in Figs. 1 - 6 for a conveyor system according to the invention in the shown embodiment consists of three relatively short belt conveyors 4, which, as shown in Fig. 2, are designed with a foremost reversing roller with small diameter so that a foremost end part 5 has very little height or thickness. Hereby the said foremost end part 5 of the belt conveyor 4 is allowed to project in over a rearmost end part 6 of the next belt conveyor 4 in the row. The sorting member 2 may of course consist of a much larger number of belt conveyors 4, corresponding to the desired number of receiving positions, as each belt conveyor 4 can serve a right and a left receiving position.

At a rearmost end part 6, each of the belt conveyors 4 are pivotably suspended on a strong vertical turning shaft 8 which is mounted at the side of strong vertical frame parts 10. At the rear, the belt conveyors 4 are provided with a pivot control mechanism 12 which is operated by electric gear motors 14. The pivot control mechanism 12 includes a control arm 16 which is rotationally rigidly connected to the gear motor 14, and which at opposite ends has upright journals 18 for guide rollers 20.

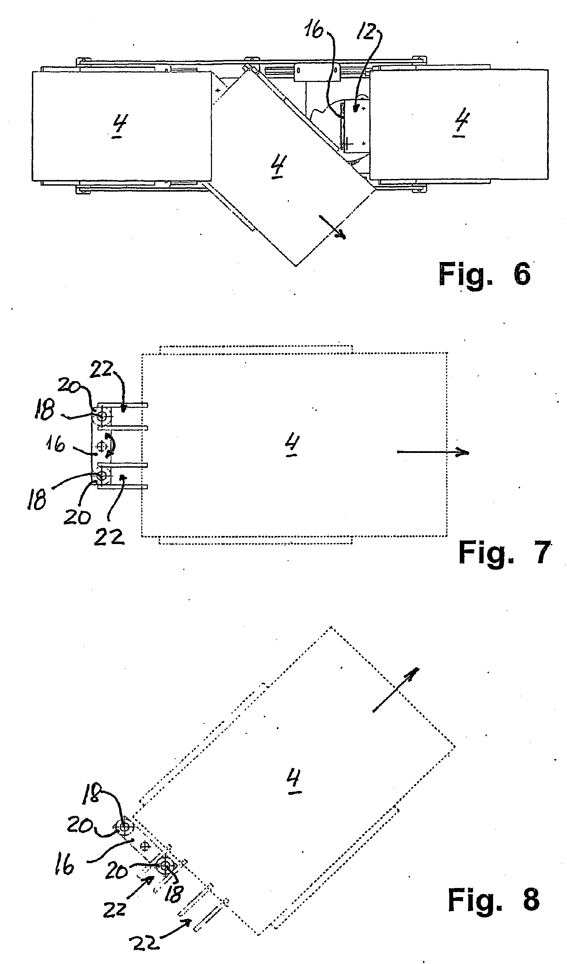

As most clearly illustrated in Figs. 7 - 9, the guide rollers 20 are adapted to interact or engage with downwards open guide sections 22, which as a part of the pivot control mechanism 12 project to the rear centrally from the belt conveyor 4, and which are disposed in parallel and with spacing corresponding to the spacing between the guide rollers 20 on the said control arm 16.

When the belt conveyor 4 is not turned out with the object of sorting out items, i.e. when the belt conveyor 4 e.g. assumes a position as rearmost or foremost in fig. 6, the control arm 16 assumes a transverse position, as shown in Fig. 7, where both guide rollers 20 engage both guide sections 22.

With the intention of turning the belt conveyor 4 to the left side relative to a central longitudinal axis, the control arm is turned clockwise to the position shown in fig. 8, where a guide roller 20 engages the bottom of left guide section 22, while the control arm 16 is disposed externally to the left side along the back side of the belt conveyor 4, i.e. this is turned to the left with the object of sorting out items to a given receiving position at the left side of the conveyor system according to the invention.

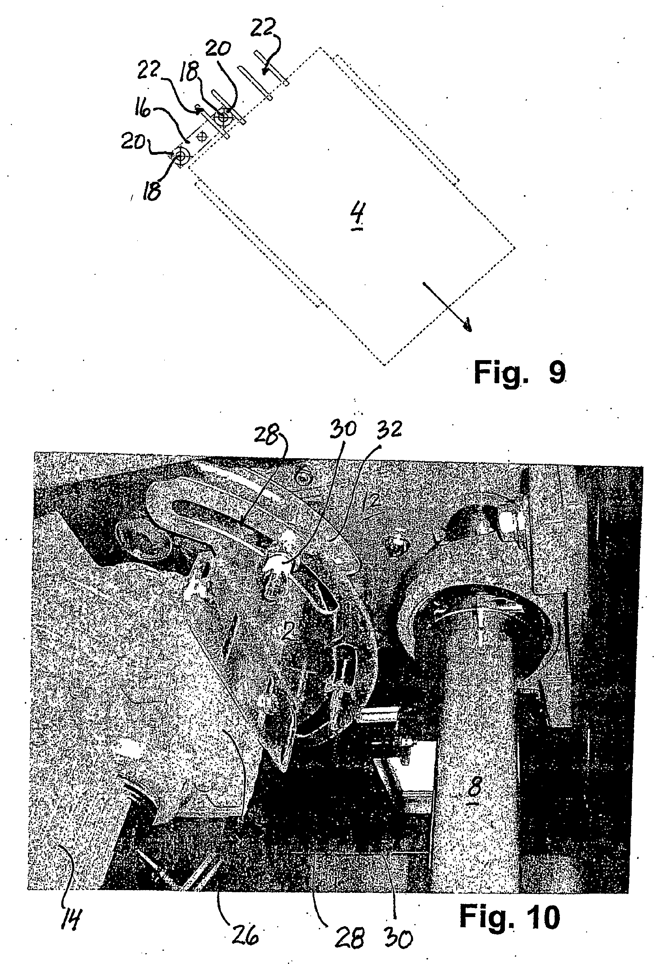

With the intention of turning the belt conveyor 4 to the right side relative to a central longitudinal axis, the control arm 16 is turned counterclockwise to the position shown in fig. 9, where a guide roller 20 engages the bottom of right guide section 22, while the control arm 16 is disposed externally to the right side along the back side of the belt conveyor 4, i.e. this is turned to the right with the object of sorting out items to a given receiving position at the right side of the conveyor system according to the invention.

In Fig. 10 appear some details of the pivot control mechanism 12 in the form of a plate-shaped fitting 24 which is fastened externally of a gear box 26 for the gear motor 14, and which is designed with two curving slots 28 in which two induction sensors 30 are mounted. With the object of positioning the turning movement of the belt conveyor 4, the sensors 30 interact with at least one upper curving plate 32 in such a way that termination of the plate 32 or cutouts at the edge of it can be read by the induction sensors 30.

For example, the conveying speed of the belt conveyors 4 may be of the magnitude 1 m/s, but it would be possible, especially when the belt conveyor 4 is turned out at one side with the object of sorting out items, to accelerate the belt conveyor 4 with the object of increasing the sorting capacity of the conveyor system.

## Claims

1. A conveyor system suitable for sorting specific items that are supplied in random sequence via a feeding conveyor, and including a number of row-wise arrayed sorting means (4) arranged to direct said items to specific receiving positions at at least one side of the sorting means, said sorting means are constituted by short individually driven belt conveyors (4) which are pivotally suspended on mainly vertical turning shafts (8), a foremost end part (5) ofwhich project in over the next belt conveyor (4) in the row, **characterised in that** said foremost end part (5) of said pivotally belt conveyor (4) is designed with little thickness as a foremost reversing roller has small diameter, and that said mainly vertical turning shaft (8) for said pivotally belt conveyor (4) is disposed at a rearmost end (6) of the belt conveyor (4), and is provided with a rearwards extending pivot control mechanism (12) being adapted to interact with a control arm (16) connected to a pivot motor (14).

2. Conveyor system according to claim 1, **characterised in that** said pivotally belt conveyor (4) at a foremost end part (5) and some distance to the rear is designed with low height as a foremost reversing roller and a reversing roller disposed some distance to the rear of the foremost roller have small diameter.

3. Conveyor system according to claim 1, **characterised in that** said pivot control mechanism (12) is designed with mutually parallel, downwards open guide sections (22) that are interspaced and adapted for receiving guide rollers (20) of the control arm (16), and that the spacing between the guide rollers (20) on the control arm (16) is the same as the spacing between the guide sections (22).

4. Conveyor system according to claims 3, **characterised in that** the engagement between the guide rollers (20) of the control arm (16) and the guide sections (22) is arranged so that the guide rollers (20) engage both guide sections (22) when the control arm (16) is transversely disposed in relation to a longitudinal centre axis of the pivotable belt conveyor (4), corresponding to the latter not being turned outwards.

5. Conveyor system according to claims 3-4, **characterised in that** the engagement between the guide rollers (20) of the control arm (16) and the guide sections (22) is arranged so that one of the guide rollers (20) engages a left one of the guide sections (22) when the control arm (16) is turned clockwise, corresponding to the pivotable belt conveyor (4) being turned outwards about 45° to the left side in relation to a longitudinal centre axis.

6. Conveyor system according to claims 3-4, **characterised in that** the engagement between the guide rollers (20) of the control arm (16) and the guide sections (22) is arranged so that one of the guide rollers (20) engages a right one of the guide sections (22) when the control arm (16) is turned counterclockwise, corresponding to the pivotable belt conveyor (4) being turned outwards about 45° to the right side in relation to a longitudinal centre axis.

7. Conveyor system according to any of the preceding claims, **characterised in that** pivot control mechanism (12) includes position control means in the form of induction sensors (30) that are adjustably mounted in curving slots (28), and which interacts with plate-shaped position guide members (32).

8. Conveyor system according to any of the preceding claims, **characterised in that** each of said belt conveyors (4) includes an electric drive motor which is adapted to accelerate the belt conveyor (4) at least when turned laterally outwards in relation to a longitudinal centre axis with the purpose of moving items out to a receiving position.

## Patentansprüche

1. Fördersystem zum Sortieren bestimmter Gegenstände die in zufälliger Reihenfolge mittels eines Zufuhrförderers zugeführt werden, und mit einer Anzahl reihenweise angeordneter Sortiermittel (4), welche die Gegenstände zu bestimmten Empfangspositionen an zumindest einer Seite der Sortiermittel leiten, wobei die Sortiermittel durch kurze, individuell angetriebene Bandförderer (4) gebildet werden, welche an im Wesentlichen vertikalen Drehwellen (8) schwenkbar getragen werden, von denen ein vorderster Endbereich (5) über den nächsten Bandförderer (4) in der Reihe hinein hervorsteht, **dadurch gekennzeichnet, dass** der vorderste Endbereich (5) des schwenkbaren Bandförderers (4) mit einer geringen Dicke ausgebildet ist wie eine vorderste Umlenkrolle einen geringen Durchmesser aufweist, und dass die im Wesentlichen vertikale Drehwelle (8) für den schwenkbaren Bandförderer (4) am hintersten Ende (6) des Bandförderers (4) angeordnet ist, und mit einem sich rückwärts erstreckenden Schwenksteuermechanismus (12) versehen ist, der mit einem mit einem Schwenkmotor (14) verbundenen Steuerarm (16) interagieren kann.

2. Fördersystem gemäß Anspruch 1, **dadurch gekennzeichnet, dass** der schwenkbare Bandförderer (4) an einem vordersten Endbereich (5) und in einigem Abstand zum hinteren mit einer geringen Höhe ausgelegt ist wie eine vorderste Umlenkrolle und eine in einigem Abstand zum hinteren der vordersten Rolle angeordnete Umlenkrolle einen kleinen Durchmesser aufweisen.

3. Fördersystem gemäß Anspruch 1, **dadurch gekennzeichnet, dass** der Schwenksteuermechanismus (12) mit wechselseitig parallelen, nach unten geöffneten Führungssektionen (22) ausgelegt ist, die beabstandet sind und zum Empfangen von Führungsrollen (20) des Steuerarms (16) eingerichtet sind, und dass der Raum zwischen den Führungsrollen (20) am Steuerarm (16) der gleiche ist wie der Raum zwischen den Führungssektionen (22).

4. Fördersystem gemäß Anspruch 3, **dadurch gekennzeichnet, dass** der Eingriff zwischen den Führungsrollen (20) des Steuerarms (16) und den Führungssektionen (22) derart eingerichtet ist, dass die Führungsrollen (20) an beiden Führungssektionen (22) eingreifen, wenn der Steuerarm (16) quer in Relation zu einer Längsmittenachse des schwenkbaren Bandförderers (4) angeordnet ist, wobei letzterer entsprechend nicht nach außen gedreht ist.

5. Fördersystem gemäß den Ansprüchen 3-4, **dadurch gekennzeichnet, dass** der Eingriff zwischen den Führungsrollen (20) des Steuerarms (16) und den Führungssektionen (22) derart eingerichtet ist, dass eine der Führungsrollen (20) an einem linken der Führungssektionen (22) eingreift, wenn der Steuerarm (16) im Uhrzeigersinn gedreht wird, was einem Drehen des schwenkbaren Bandförderers (4) zur linken Seite in Relation zu einer Längsmittenachse um ungefähr 45° nach außen entspricht.

6. Fördersystem gemäß den Ansprüchen 3-4, **dadurch gekennzeichnet, dass** der Eingriff zwischen den Führungsrollen (20) des Steuerarms (16) und den Führungssektionen (22) derart eingerichtet ist, dass eine der Führungsrollen (20) an einer rechten der Führungssektionen (22) eingreift, wenn der Steuerarm (16) entgegen dem Uhrzeigersinn gedreht wird, was einem Drehen des schwenkbaren Bandförderers (4) zur rechten Seite in Relation zu einer Längsmittenachse um ungefähr 45° nach außen entspricht.

7. Fördersystem gemäß einem der vorangegangenen Ansprüche, **dadurch gekennzeichnet, dass** der Schwenksteuermechanismus (12) ein Positionssteuermittel in der Gestalt von Induktionssensoren (30) aufweist, die in Krümmungsschlitzen (28) einstellbar befestigt sind, und die mit plattenförmigen Positionsführungselementen (32) interagieren.

8. Fördersystem gemäß einem der vorangegangenen Ansprüche, **dadurch gekennzeichnet, dass** jeder der Bandförderer (4) einen Elektroantriebsmotor aufweist, der den Bandförderer (4) beschleunigen kann, zumindest wenn er seitlich nach außen in Relation zu einer Längsmittenachse heraus zum Bewegen der Gegenstände zu einer Empfangsposition gedreht ist.

## Revendications

1. Système de convoyeur adapté pour trier des articles spécifiques qui sont fournis dans un ordre aléatoire via un convoyeur d'alimentation, et qui comprend un certain nombre de moyens de tri disposés en rangées (4) et prévus pour orienter lesdits articles vers des postes de réception spécifiques au niveau d'au moins un côté desdits moyens de tri, lesdits moyens de tri étant composés de convoyeurs à courroie courts entraînés de manière individuelle (4) et qui sont suspendus de manière pivotante à des axes de rotation principalement verticaux (8), dont une partie d'extrémité avant (5) se projette par-dessus le convoyeur à courroie suivant (4) de la rangée, **caractérisé en ce que** ladite partie d'extrémité avant (5) dudit convoyeur à courroie pivotant (4) soit conçue avec une faible épaisseur étant donné qu'un galet d'inversion avant possède un diamètre réduit, et **en ce que** ledit axe de rotation principalement vertical (8) destiné audit convoyeur à courroie pivotant (4) soit disposé au niveau d'une extrémité arrière (6) dudit convoyeur à courroie (4), et soit muni d'un mécanisme de commande de pivot qui s'étend vers l'arrière (12) et qui soit adapté pour interagir avec un bras de commande (16) relié à un moteur de pivot (14).

2. Système de convoyeur selon la revendication 1, **caractérisé en ce que** ledit convoyeur à courroie pivotant (4) situé au niveau d'une extrémité avant (5) et à une certaine distance par rapport à l'arrière soit conçu avec une faible hauteur étant donné qu'un galet d'inversion avant et un galet d'inversion disposé à une certaine distance par rapport à l'arrière dudit galet avant possèdent un diamètre réduit.

3. Système de convoyeur selon la revendication 1, **caractérisé en ce que** ledit mécanisme de commande de pivot (12) soit conçu avec des longueurs de guidage ouvertes vers le bas et parallèles (22) qui sont espacées et adaptées pour recevoir les galets de guidage (20) dudit bras de commande (16), et **en ce que** l'espacement entre lesdits galets de guidage (20) sur ledit bras de commande (16) soit identique à celui qui existe entre lesdites longueurs de guidage (22).

4. Système de convoyeur selon la revendication 3, **caractérisé en ce que** la mise en prise entre lesdits galets de guidage (20) dudit bras de commande (16) et lesdites longueurs de guidage (22) soit prévue de sorte que lesdits galets de guidage (20) mettent en prise lesdites deux longueurs de guidage (22) lorsque ledit bras de commande (16) est disposé transversalement par rapport à un axe central longitudinal dudit convoyeur à courroie pivotant (4), ce qui correspond au fait que ce dernier ne soit pas tourné vers l'extérieur.

5. Système de convoyeur selon les revendications 3 et 4, **caractérisé en ce que** la mise en prise entre lesdits galets de guidage (20) dudit bras de commande (16) et lesdites longueurs de guidage (22) soit prévue de sorte que l'un desdits galets de guidage (20) mette en prise une longueur de guidage de gauche (22) lorsque ledit bras de commande (16) est tourné dans le sens des aiguilles d'une montre, ce qui correspond au fait que ledit convoyeur à courroie pivotant (4) soit tourné vers l'extérieur à environ 45° par rapport au côté gauche par rapport à un axe central longitudinal.

6. Système de convoyeur selon les revendications 3 et 4, **caractérisé en ce que** ladite mise en prise entre lesdits galets de guidage (20) dudit bras de commande (16) et lesdites longueurs de guidage (22) soit prévue de sorte que l'un desdits galets de guidage (20) mette en prise une longueur de guidage de droite (22) lorsque ledit bras de commande (16) est tourné dans le sens inverse des aiguilles d'une montre, ce qui correspond au fait que ledit convoyeur à courroie pivotant (4) soit tourné vers l'extérieur à environ 45° par rapport au côté droit par rapport à un axe central longitudinal.

7. Système de convoyeur selon l'une quelconque des revendications précédentes, **caractérisé en ce que** ledit mécanisme de commande de pivot (12) comprenne un moyen de commande de position sous la forme de capteurs à induction (30) qui sont montés de manière réglable dans des fentes incurvées (28), et qui interagit avec des éléments de guidage de position en forme de plaques (32).

8. Système de convoyeur selon l'une quelconque des revendications précédentes, **caractérisé en ce que** chacun desdits convoyeurs à courroie (4) comprenne un moteur électrique qui est adapté pour accélérer ledit convoyeur à courroie (4) au moins lorsqu'il est tourné latéralement vers l'extérieur par rapport à un axe central longitudinal dans le but de déplacer lesdits articles vers un poste de réception.
